# EUROPÄISCHE PATENTSCHRIFT

(11) **EP 1 307 680 B1**
(45) Veröffentlichungstag und Bekanntmachung des Hinweises auf die Patenterteilung: **13.09.2006**
(21) Anmeldenummer: 01962927.8
(22) Anmeldetag: 09.08.2001
(51) Int. Cl.: F16L 55/165

(54) **VERFAHREN ZUM SANIEREN VON ROHREN**
METHOD FOR REFURBISHING PIPES
PROCEDE POUR RENOVER DES TUYAUX

(30) Priorität: 10.08.2000 DE 10039059
(43) Veröffentlichungstag der Anmeldung: 07.05.2003
(73) Patentinhaber: REHAU AG + Co, 95111 Rehau (DE)
(72) Erfinder: KRAUSE, Frank, 95111 Rehau (DE)
(86) Internationale Anmeldenummer: PCT/EP2001/009210
(87) Internationale Veröffentlichungsnummer: WO 2002/012774

(56) Entgegenhaltungen:
- EP-A- 0 065 886
- WO-A-00/28249
- WO-A-98/50725
- GB-A- 2 341 434
- GB-A- 2 353 581
- GB-A- 2 357 559

## Beschreibung

Die vorliegende Erfindung bezieht sich auf ein Verfahren zum Sanieren von Rohren, bei dem ein Innenrohr aus wenigstens einem thermoplastischen Kunststoff in das zu sanierende Rohr eingebracht wird, wobei das Innenrohr vor dem Einbringen querschnittsreduzierend verformt und nach dem Einbringen rückgeformt wird, wobei der Kunststoff des Innenrohres wenigstens abschnittsweise vernetzbar ist, und ein Vernetzen des vor dem Einbringen des Innenrohres im Wesentlichen unvernetzten Kunststoffes nach dem Einbringen des Innenrohres in das zu sanierende Rohr erfolgt.

Ein derartiges Verfahren ist aus dem Stand der Technik bekannt. Es findet z.B. Anwendung bei der Sanierung von Gas-, Trinkwasser- und Abwasserleitungen. Die Leitungen können aus z.B. Stahl, Guss, Beton oder Steinzeug bestehen. Anstelle des Austauschs der Rohre bietet eine Sanierung eine kostengünstige Möglichkeit, die Funktionsfähigkeit der Leitung wieder herzustellen. Bei dem bekannten Verfahren wird ein Innenrohr aus PEHD mit einem Außendurchmesser kleiner als der Innendurchmesser der zu sanierenden Leitung extrudiert und querschnittsreduzierend verformt, wobei der Querschnitt ein im Wesentlichen U-förmiges Profil aufweist. Das querschnittsreduzierte Rohr wird auch als U-Liner bezeichnet. Durch den U-förmigen Querschnitt sind die Querschnittsaußenabmessungen des Innenrohrs erheblich reduziert. Die Querschnittsreduzierung ist erforderlich, um das Innenrohr mit dem Außendurchmesser überhaupt in größeren Längen in die zu sanierende Leitung einziehen zu können, da insbesondere in gekrümmten Bereichen der Leitung es zu sehr starker Reibung zwischen dem Innenrohr und der zu sanierenden Leitung kommen würde. Das Innenrohr wird auf eine Trommel gewickelt an die Baustelle geliefert. Dort kann es von der Trommel mit einem Zugseil in das zu sanierende Rohr eingezogen werden, wobei das Zugseil zuvor in das zu sanierende Rohr eingebracht wurde. Wenn das Innenrohr vollständig eingezogen ist, wird das Rohrinnere mit einem Druckmedium beaufschlagt, wodurch das Innenrohr rückgeformt wird und seine ursprüngliche Gestalt annimmt. Der Außendurchmesser des Innenrohrs entspricht dann im Wesentlichen dem Innendurchmesser des zu sanierenden Rohrs. Dadurch wird ein sogenannter "Close-Fit" erreicht. Aufgrund des verwendeten Materials ist der Widerstand gegen Abrieb und Risswachstum sowie die Innendruckbelastbarkeit bei erhöhten Betriebstemperaturen jedoch beschränkt.

Darüber hinaus sind auch Verfahren bekannt, bei denen Innenrohre aus einem Material mit erhöhtem Widerstand gegen Abrieb und Risswachstum sowie langzeitiger Innendruckbelastbarkeit und Chemikalienbeständigkeit bei erhöhten Betriebstemperaturen zum Sanieren von Leitungen verwendet werden. Diese Rohre sind aus sogenannten vernetzten Kunststoffen hergestellt. Für das Einziehen des Innenrohres in das zu sanierende Rohr muss der Außendurchmesser des Innenrohrs erheblich kleiner als der Innendurchmesser des zu sanierenden Rohrs sein. Dadurch entsteht ein Spalt zwischen Innenrohr und dem zu sanierenden Rohr. Wegen der im Betrieb durch Betriebsdruck und - temperatur auftretenden Rohrspannungen ist es erforderlich, das Innenrohr zusätzlich in dem zu sanierenden Rohr zu verdämmen. Dazu wird in den Spalt zwischen Innenrohr und dem zu sanierenden Rohr ein fließfähiger Dämmstoff eingebracht. Bei großen Verlegelängen kommt es jedoch immer wieder zu Lufteinschlüssen oder Lunkern im Dämmstoff, wodurch sich kaum vorhersehbare Schwachstellen ergeben.

Aufgabe der Erfindung ist es daher, ein flexibel einsetzbares Verfahren zum Sanieren von Rohren einzugeben.

Die Aufgabe wird erfindungsgemäß dadurch gelöst, dass das Innenrohr am seiner Innenseite und/oder Außenseite eine die Vernetzung hemmende Beschichtung aufweist.

Diese Lösung ist einfach und hat den Vorteil, dass das Innenrohr in einem querschnittsreduzierten Zustand eingezogen, anschließend rückgeformt werden kann und nach der Vernetzung einen deutlich höheren Widerstand gegen Abrieb und Risswachstum sowie eine höhere Innendruckbelastbarkeit und Chemikalienbeständigkeit bei erhöhten Betriebstemperaturen aufweist. Durch die Möglichkeit des gezielten Vernetzens wird das Innenrohr somit erst dann mit der gewünschten Festigkeit versehen, wenn diese Festigkeit erforderlich ist.

Ein weiteres Verfahren ist aus der GB-A-2 341 434 bekannt. Bei diesem Verfahren wird ein Innenrohr aus einem thermoplastischen Material in das zu sanierende Rohr eingebracht, wobei das Innenrohr vor dem Einbringen querschnittsreduzierend verformt und nach dem Einbringen rückgeformt wird. Der Kunststoff des Innenrohres ist wenigstens abschnittsweise vernetzbar und ein Vernetzen des vor dem Einbringen des Innenrohrs im Wesentlichen unvernetzten Kunststoffes erfolgt nach dem Einbringen des Innenrohrs in das zu sanierende Rohr.

Nachteilig bei diesem Verfahren ist, dass das im Rahmen des Verfahrens hergestellte Innenrohr nur kurze Lagerzeiten gestattet, da die Vernetzung des Innenrohres aufgrund der Umgebungsfeuchtigkeit ungewollt und kontinuierlich fortschreitet. Das Innenrohr erreicht dadurch bereits bei der Lagerung und vor dem Einsatz einen Vernetzungsgrad, der beim Querschnittsreduzieren wie auch beim Rückformen des Innenrohres erhöhte Umformkräfte erfordert, wobei es nicht ausgeschlossen werden kann, dass das Innenrohr vorher vollständig vernetzt und somit unbrauchbar ist. Dies hat zur Folge, dass keine größeren Lagerbestände an Innenrohren gehalten werden können, sondern die Innenrohre unmittelbar nach deren Herstellung verwendet werden müssen. Dadurch kann es zu Engpässen kommen, die einen flexiblen und vor allem wirtschaftlichen Einsatz dieses Verfahrens wesentlich einschränken.

Die WO-A-00/28249 beschreibt ein Verfahren zur Herstellung von Rohren, bei dem ein Innenrohr aus vernetzbarem Kunststoff mit einem spiralförmig gewickelten Außenrohr verbunden wird.

Eine Vernetzung des Innenrohres mit reduziertem Querschnitt vor dem Einziehen wäre für die Rückformung und den close fit des Innenrohres in dem zu sanierenden Rohr nachteilig.

In einer vorteilhaften Weiterbildung des Verfahrens kann das Innenrohr nach dem Rückformen über seine Querschnittsaußenabmessung vor dem querschnittsreduzierendem Verfahren hinaus aufgeweitet werden, bis der Außendurchmesser des Innenrohres an dem Innendurchmesser des zu sanierenden Rohrs zumindest abschnittsweise anliegt. Dieses Anliegen wird als "close fit" bezeichnet. Das Vernetzen kann dann während oder nach dem Aufweiten des Innenrohrs und Anliegen an das zu sanierende Rohr erfolgen. Durch das anliegende Innenrohr wird die lichte Weite der sanierten Leitung nur geringfügig reduziert.

In einer vorteilhaften Weiterbildung der Erfindung kann das Innenrohr silanhaltiges PEHD aufweisen. Ein solcher Kunststoff ist durch Wasser vernetzbar.

Auch kann es sich als günstig erweisen, wenn der vernetzbare Kunststoff keinen Katalysator enthält. Ohne den Katalysator kann die Lagerzeit mehrere Wochen oder Monate betragen, ohne dass das Rückformvermögen des Innenrohrs spürbar beeinflusst wird.

Auch kann es sich als vorteilhaft erweisen, wenn der Vernetzungsgrad des vernetzbaren Kunststoffs des Innenrohrs vor dem Einbringen in das zu sanierende Rohr weniger als 30% beträgt. Bei einem solchen Vernetzungsgrad des Rohrmaterials ist ein Rückformen des Innenrohres, Aufweiten und Anlegen des Außendurchmessers des Innenrohres an den Innendurchmesser des zu sanierenden Rohrs noch möglich.

Von Vorteil kann es auch sein, wenn das Rückformen durch Aufbringen eines Innendrucks mittels eines Druckmediums erfolgt. Ein solches Druckmittel kann z.B. Dampf, Wasser oder Druckluft sein. Mit einem solchen Druckmittel lässt sich auf einfache Weise schnell ein Rückformen des Innenrohrs erzielen.

Als vorteilhaft kann es sich auch erweisen, wenn als Druckmedium ein wasserhaltiges Medium verwendet wird. Mit einem wasserhaltigen Druckmedium lässt sich neben dem Rückformen des Innenrohrs gleichzeitig auch eine Vernetzung des vernetzbaren Kunststoffs einleiten und herbeiführen.

Zur Beschleunigung der Vernetzung kann es sich hier als vorteilhaft erweisen, wenn das Wasser auf maximal 80°C erwärmt wird. Wärme fördert zusätzlich die Vernetzung des Kunststoffs durch Wasser.

Mit Wasserdampf können höhere Temperaturen erzielt werden. Dadurch lässt sich eine weitere Steigerung der Vernetzungsgeschwindigkeit erzielen. Hierbei kann es sich als günstig erweisen, wenn das Druckmedium auf 130°C erwärmt wird. Temperaturen über der Kristallitschmelztemperatur führen zu einem Aufschmelzen des Rohrmaterials.

Für das Durchführen des Verfahrens kann es sich als günstig erweisen, wenn der Druck des Druckmediums etwa 1 bis 2 bar beträgt. Bei diesem Druck lässt sich das Verfahren kostengünstig durchführen. Die benötigten Drücke sind vergleichsweise gering, führen jedoch zu einer beschleunigten Vernetzung.

Sollte die Vernetzung bei der Durchführung des Verfahrens nicht vollständig erfolgen, so kann diese während des Betriebs des Rohrs weitergeführt werden. Wenn z.B. Abwasser durch das Rohr geleitet wird, führen die Wasserbestandteile zu einer weiteren Vernetzung, bis die Vernetzung vollständig ist.

Auch kann es sich als vorteilhaft erweisen, wenn die Vernetzung während des Rückformens erfolgt. Dadurch kann das Rückformen und Vernetzen gleichzeitig durchgeführt werden. Auf diese Weise lässt sich das Verfahren beschleunigen.

Vorteilhaft kann es auch sein, wenn das Vernetzen nach dem Rückformen erfolgt. Dann lässt sich das Rückformen z. B. mit erwärmter Druckluft durchführen und erst anschließend kann dann die Vernetzung gezielt während oder nach dem Aufweiten erfolgen.

Zudem kann es vorteilhaft sein, wenn das Innenrohr vollständig aus vernetzbarem Kunststoff besteht. Ein solches Innenrohr kann kostengünstig hergestellt werden.

Erfindungsgemäß weist das Innenrohr an seiner Innenseite oder Außenseite eine die Vernetzung hemmende Beschichtung auf. Durch eine solche Beschichtung lässt sich die Lagerzeit verlängern.

Von Vorteil kann es dabei sein, wenn die Beschichtung Polyethylen enthält. Polyethylen wirkt als Barriereschicht auf dem silanhaltigen PEHD gegenüber Wasser, wodurch die Vernetzung verlangsamt wird. Die Beschichtung kann dabei wesentlich dünner als die Wandstärke des Innenrohrs sein.

Zur weiteren Verbesserung der Lagerfähigkeit des Innenrohrs kann es sich erfindungsgemäß als vorteilhaft erweisen, wenn das Innenrohr an der Innen- und Außenseite beschichtet ist.

Nachfolgend wird die Erfindung anhand eines Ausführungsbeispiels näher erläutert.

Es zeigen:
- Fig. 1: das zu sanierende Rohr mit dem eingezogenen Innenrohr in einer Querschnittsansicht;
- Fig. 2: das sanierte Rohr.

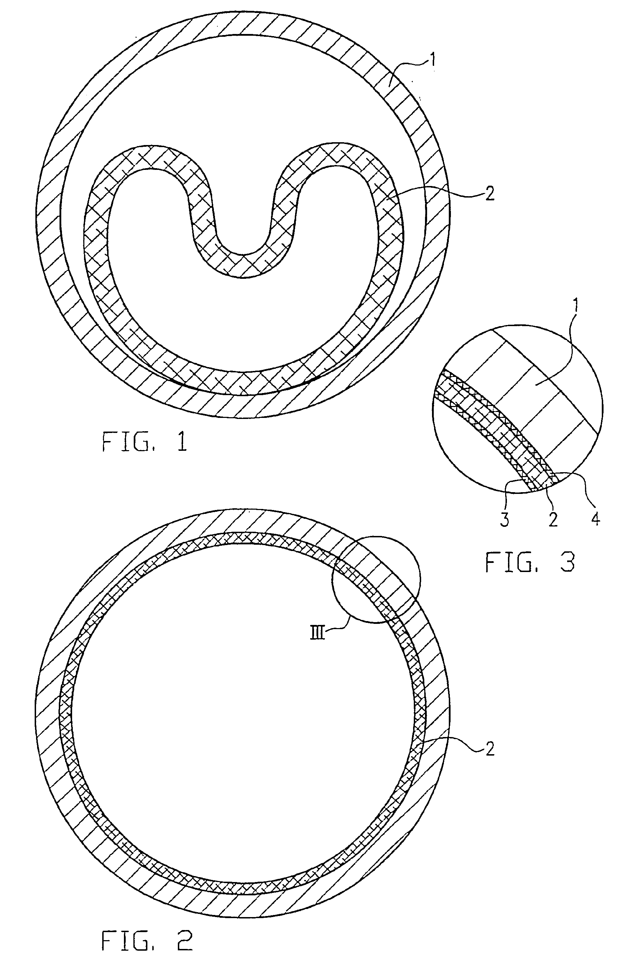

Fig. 1 zeigt ein zu sanierendes Rohr 1 im Querschnitt. Das Rohr besteht aus Stahl. Alternativ kann das Rohr 1 auch aus Beton oder ähnlichen Materialien bestehen, wie sie für Abwasserrohre verwendet werden. Das vorliegende Rohr 1 soll zum Transport von z. B. Öl, Feststoffen und Wasser vorgesehen sein, das bei einer maximalen Temperatur von 90°C transportiert werden soll. Die Betriebsdrücke richten sich nach dem Einsatzbereich.

Im Inneren des Rohrs 1 ist ein Innenrohr 2 in einem Montagezustand in das Lumen des Rohrs 1 eingeschoben. In diesem Montagezustand verfügt das Innenrohr 2 über einen im Wesentlichen U-förmigen Querschnitt, der aus einem ursprünglich zylindrischen Innenrohr 2 geformt wurde.

Das Umformen des Innenrohrs 2 vom zylindrischen in den U-förmigen Querschnitt erfolgt bei der Herstellung des Innenrohrs, noch vor dem Einziehen in das Rohr 1.

Das Innenrohr 2 besteht aus drei Schichten, wobei das eigentliche Innenrohr 2 aus silanhaltigem PEHD (PE-X_{b}) besteht, und an den Außen- und Innenseiten jeweils mit einer Beschichtung 3, 4 versehen ist. Die Beschichtungen 3 und 4 bestehen aus Polyethylen (PE). Die Materialien von Innenrohr und Beschichtung sind extrudierbar, so dass das gesamte Innenrohr mit den Beschichtungen extrudierbar ist.

Das Umformen vom kreisförmigen in den U-förmigen Querschnitt erfolgt unmittelbar nach der Extrusion des Rohres. Anstelle des U-förmigen Querschnittes kann das Innenrohr auch z. B. eine X-Querschnitt aufweisen.

Nachfolgend wird die Wirkungs- und Funktionsweise der Erfindung näher erläutert:

Zunächst wird das Innenrohr in bekannter Weise extrudiert und mit den Beschichtungen 3 und 4 versehen. Anschließend wird das extrudierte Innenrohr 2 in einen U-förmigen Querschnitt entsprechend Fig. 1 überführt. Aufgrund des verwendeten Materials fand bislang noch keine wesentliche Vernetzung statt. Das Innenrohr hat somit noch nicht seine endgültige Stabilität eingenommen und kann daher verformt werden. Wenn das Innenrohr in U- oder X-Profil verformt wird, kann es auf eine Trommel aufgewickelt werden.

Zum Durchführen einer Rohrsanierung wird nunmehr das U-förmig verformte Innenrohr auf der Baustelle angeliefert, wo das Sanieren eines Rohrs erfolgen soll. Hierzu wird das Innenrohr mit U-förmigen Querschnitt in das zu sanierende Rohr in bekannter Weise entsprechend Fig. 1 eingeschoben bzw. eingezogen. Anschließend wird das Innenrohr mit einem Druckmedium, vorzugsweise Dampf, beaufschlagt, wodurch ein Erwärmen des Innenrohrs erfolgt und das Innenrohr in seinen ursprünglichen kreisförmigen Ausgangsquerschnitt rückverformt wird.

Der durch das Druckmedium erzeugte Innendruck führt darüber hinaus zu einer Aufweitung des Innenrohrs über den ursprünglichen kreisförmigen Querschnitt hinaus derart, dass der Außendurchmesser des Innenrohrs im Wesentlichen dem Innendurchmesser des auszukleidenden Rohrs entspricht, wobei die Außenseite des Innenrohrs mit der Innenseite des zu sanierenden Rohrs in Anlage gebracht wird.

Das zur Herstellung des Innenrohrs verwendete Material erfährt eine Vernetzung durch Dampf oder Wasser. Im vorliegenden Beispiel wird als Druckmedium Dampf verwendet, der in das beidseitig abgedichtete Innenrohr eingebracht wird. Die Wasserdampfmoleküle durchdringen die innere Beschichtung und gelangen dadurch mit dem vernetzbaren Material des Innenrohrs in Verbindung, das aufgrund des Druckes aufgeweitet wird und gleichzeitig eine Vernetzung erfährt. Die Vernetzung wird durch den Druck und die erhöhte Temperatur beschleunigt. Die innere Beschichtung wirkt dabei als Barriere, die es ermöglicht, den Vernetzungsvorgang zu steuern. Je nach Dicke dieser Beschichtung kann das Vernetzen verlangsamt oder aber beschleunigt werden. Zusätzlich kann auch von außen her Wasser aufgegeben werden. Auch hier wirkt die äußere Beschichtung als Barriere. Die Vernetzung kann nun weiter fortschreiten, wobei das Innenrohr eine nur sehr geringe Schrumpfung erfährt und seine endgültige Form einnimmt. Nach dem Aufweiten und Vernetzen des Innenrohres wird das Druckmedium abgelassen.

Die folgenden Werte haben sich zur Durchführung des erfindungsgemäßen Verfahrens als vorteilhaft erwiesen. Der Dampf wird auf 125°C erwärmt unter einem Druck von ca. 1,5 bar. Um ein Überdehnen des Materials zu vermeiden, sollte der Innendruck erst nach einer Phase der Materialerwärmung in einem Zeitraum von mindestens 60 min kontinuierlich vom Umgebungsdruck auf den Maximaldruck gesteigert werden.

Das Innenrohr nimmt nunmehr seine endgültige Form ein und ist im Wesentlichen vollständig vernetzt. Wenn die Vernetzung noch nicht vollständig abgeschlossen ist, kann das Innenrohr unter Betriebsbedingungen durch den Wasseranteil des geförderten Mediums vollständig vernetzen.

Durch das erfindungsgemäße Verfahren ist es nunmehr möglich, ein sehr eng an der Innenseite des zu sanierenden Rohrs anliegendes, sehr stabiles Innenrohr zur Rohrsanierung vorzusehen (sogenannter close-Fit). Gegenüber herkömmlichen Lösungen sind etwaige Hohlräume zwischen Innenrohr und dem zu sanierenden Rohr sehr klein oder nicht mehr vorhanden, so dass beinahe der Innendurchmesser des zu sanierenden Rohrs nur um die Wandstärke des Innenrohrs reduziert zur Verfügung steht.

Aufgrund der großen Festigkeit des Innenrohrs ist es nicht mehr erforderlich, das Innenrohr gegenüber dem zu sanierenden Rohr zu verdämmen. Dadurch entfällt ein Arbeitsschritt. Neben der Zeitersparnis sinkt auch die Gefahr von Lufteinschlüssen im Dämmstoff.

## Patentansprüche

1. Verfahren zum Sanieren von Rohren, bei dem ein Innenrohr (2) aus wenigstens einem thermoplastischen Kunststoff in das zu sanierende Rohr (1) eingebracht wird, wobei das Innenrohr (2) vor dem Einbringen querschnittsrsduzierend verformt und nach dem Einbringen rückgeformt wird,
wobei der Kunststoff des Innenrohrs (2) wenigstens abschnittsweise vernetzbar ist, und ein Vernetzen des vor dem Einbringen des Innenrohrs (2) im Wesentlichen unvernetzten Kunststoffs nach dem Einbringen des Innenrohrs (2) in das zu sanierende Rohr (1) erfolgt,
**dadurch gekennzeichnet**
**dass** das Innenrohr (2) an seiner Innenseite und/oder Außenseite eine die Vernetzung hemmende Beschichtung (3, 4) aufweist.

2. Verfahren nach Anspruch 1, **dadurch gekennzeichnet, dass** das Innenrohr (2) während oder nach dem Rückformen über seine Querschnittsaußenabmessung vor dem querschnittsreduzierenden Verformen hinaus aufgeweitet wird, bis das Innenrohr (2) an dem zu sanierenden Rohr (1) zumindest abschnittsweise anliegt.

3. Verfahren nach Anspruch 1 oder 2, **dadurch gekennzeichnet, dass** das Rückformen durch Aufbringen eines innendrucks mittels eines Druckmediums erfolgt.

4. Verfahren nach einem der vorangegangenen Ansprüche, **dadurch gekennzeichnet, dass** ein wasserhaltiges Druckmedium verwendet wird.

5. Verfahren nach einem der vorangegangenen Ansprüche, **dadurch gekennzeichnet, dass** als Druckmedium Wasser verwendet wird.

6. Verfahren nach einem der vorangegangen Ansprüche, **dadurch gekennzeichnet, dass** das Druckmedium erwärmt wird.

7. Verfahren nach einem der Ansprüche 1 bis 4, **dadurch gekennzeichnet, dass** als Druckmedium Wasserdampf verwendet wird.

8. Verfahren nach einem der vorangegangenen Ansprüche, **dadurch gekennzeichnet, dass** der Kunststoff des Innenrohrs (2) silanhaltiges PEHD aufweist.

9. Verfahren nach einem der vorangegangenen Ansprüche, **dadurch gekennzeichnet, dass** der Vernetzungsgrad des vernetzbaren Kunststoffs des Innenrohrs (2) vor dem Einbringen in das zu sanierende Rohr (1) weniger als 30% beträgt.

10. Verfahren nach einem der vorangegangen Ansprüche, **dadurch gekennzeichnet, dass** das Vernetzen während des Rückformens erfolgt.

11. Verfahren nach einem der Ansprüche 1 bis 9, **dadurch gekennzeichnet, dass** das Vernetzen nach dem Rückformen erfolgt.

12. Verfahren nach einem der vorangegangenen Ansprüche, **dadurch gekennzeichnet, dass** die Beschichtung Polyethylen enthält.

## Claims

1. Method for refurbishing pipes, in which an inner pipe (2) made of at least one thermoplastic material is inserted into the pipe (1) to be refurbished, the inner pipe (2) being deformed before insertion in such a way as to reduce its cross section and returned to its original shape after insertion, the plastic of the inner pipe (2) being crosslinkable, at least in certain portions, and the plastic, which is essentially uncrosslinked before insertion of the inner pipe (2), being crosslinked after insertion of the inner pipe (2) into the pipe (1) to be refurbished, **characterized in that** the inner pipe (2) has on its inner side and/or outer side a coating (3, 4) inhibiting the crosslinking.

2. Method according to Claim 1, **characterized in that**, during or after being returned to its original shape, the inner pipe (2) is widened beyond its outer cross-sectional dimensions before the cross-section-reducing deformation, until the inner pipe (2) bears against the pipe (1) to be refurbished, at least in certain portions.

3. Method according to Claim 1 or 2, **characterized in that** the return to the original shape takes place by applying an internal pressure by means of a pressure medium.

4. Method according to one of the preceding claims, **characterized in that** an aqueous pressure medium is used.

5. Method according to one of the preceding claims, **characterized in that** water is used as the pressure medium.

6. Method according to one of the preceding claims, **characterized in that** the pressure medium is heated.

7. Method according to one of Claims 1 to 4, **characterized in that** steam is used as the pressure medium.

8. Method according to one of the preceding claims, **characterized in that** the plastic of the inner pipe (2) comprises silane-containing HDPE.

9. Method according to one of the preceding claims, **characterized in that** the degree of crosslinking of the crosslinkable plastic of the inner pipe (2) before insertion into the pipe (1) to be refurbished is less than 30%.

10. Method according to one of the preceding claims, **characterized in that** the crosslinking takes place during the return to the original shape.

11. Method according to one of Claims 1 to 9, **characterized in that** the crosslinking takes place after the return to the original shape.

12. Method according to one of the preceding claims, **characterized in that** the coating contains polyethylene.

## Revendications

1. Procédé pour rénover des tuyaux, dans lequel un tuyau interne (2) en au moins un matériau thermoplastique est introduit dans le tuyau à rénover (1), le tuyau interne (2) étant déformé par réduction de sa section transversale avant son insertion et étant remis en forme après son insertion,
le plastique du tuyau.interne (2) pouvant être au moins partiellement réticulable, et une réticulation du plastique essentiellement non réticulé avant l'insertion du tuyau interne (2) ayant lieu après l'insertion du tuyau interne (2) dans le tuyau à rénover (1),
**caractérisé en ce que**
le tuyau interne (2) présente sur son côté interne et/ou sur son côté externe un revêtement (3, 4) empêchant la réticulation.

2. Procédé selon la revendication 1, **caractérisé en ce que** le tuyau interne (2) est élargi pendant ou après sa reprise de forme, au-delà de sa dimension extérieure en section transversale avant la déformation réduisant la section transversale, jusqu'à ce que le tuyau interne (2) s'applique au moins en partie contre le tuyau à rénover (1).

3. Procédé selon la revendication 1 ou 2, **caractérisé en ce que** la remise en forme est effectuée par application d'une pression interne au moyen d'un fluide de pression.

4. Procédé selon l'une quelconque des revendications précédentes, **caractérisé en ce que** l'on utilise un fluide de pression contenant de l'eau.

5. Procédé selon l'une quelconque des revendications précédentes, **caractérisé en ce que** l'on utilise de l'eau comme fluide de pression.

6. Procédé selon l'une quelconque des revendications précédentes, **caractérisé en ce que** le fluide de pression est chauffé.

7. Procédé selon l'une quelconque des revendications 1 à 4, **caractérisé en ce que** l'on utilise comme fluide de pression de la vapeur d'eau.

8. Procédé selon l'une quelconque des revendications précédentes, **caractérisé en ce que** le plastique du tuyau interne (2) présente du PEHD contenant des silanes.

9. Procédé selon l'une quelconque des revendications précédentes, **caractérisé en ce que** le degré de réticulation du plastique réticulable du tuyau interne (2) est inférieur à 30% avant l'insertion dans le tuyau à rénover (1).

10. Procédé selon l'une quelconque des revendications précédentes, **caractérisé en ce que** la réticulation s'effectue pendant la remise en forme.

11. Procédé selon l'une quelconque des revendications 1 à 9, **caractérisé en ce que** la réticulation s'effectue après la remise en forme.

12. Procédé selon l'une quelconque des revendications précédentes, **caractérisé en ce que** le revêtement contient du polyéthylène.
